(19) Europäisches Patentamt

European Patent Office

Office européen des brevets

(11) EP 0 879 746 A2

(12) EUROPÄISCHE PATENTANMELDUNG

(43) Veröffentlichungstag:
25.11.1998 Patentblatt 1998/48

(51) Int. Cl.⁶: **B60T 8/00**

(21) Anmeldenummer: 98105096.6

(22) Anmeldetag: 20.03.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 22.05.1997 DE 19721433

(71) Anmelder: WABCO GmbH
30453 Hannover (DE)

(72) Erfinder:
• Lenz, Thomas
30880 Laatzen (DE)

• Riedemann, Henrich
30457 Hannover (DE)
• Jöllerichs, Rainer
31832 Springe (DE)
• Pannbacker, Helmut
30966 Hemmingen (DE)
• Schmidt, Detlef
30989 Gehrden (DE)

(74) Vertreter: Schrödter, Manfred
WABCO GmbH,
Am Lindener Hafen 21
30453 Hannover (DE)

(54) **Verfahren zur Verarbeitung von Signalen**

(57) Ein Signal (S) weist zu jedem Zeitpunkt einen Wert auf. Die Werte können sich mit der Zeit verändern und innerhalb oder außerhalb eines festgelegten Grundwertebereichs (GWMIN, GWMAX) angeordnet sein. Das Signal (S) wird in einem Verfahren verarbeitet, in dem beim Auftreten bestimmter Werte des Signals (S) außerhalb des Grundwertebereichs (GWMIN, GWMAX) bestimmte, den Werten des Signals (S) zugeordnete Verfahrensschritte (43, 49) ausgeführt werden. Hierbei kann es vorkommen, daß die Ausführung der bestimmten Verfahrensschritte (43, 49) in unerwünschter Weise aufgrund von unplausiblen Werten des Signals (S) ausgelöst wird. Ein derartiges unplausibles Signalverhalten soll schnell erkannt werden und die unerwünschten Auswirkungen des unplausiblen Signalverhaltens frühzeitig vermindert bzw. ganz verhindert werden. Hierfür werden aus dem Signal (S) als Dominanzwert (DW) ein relativ häufig auftretender Wert des Signals (S) sowie ein Häufigkeitswort (HW) ermittelt, der die Häufigkeit des Auftretens von in der Umgebung des Dominanzwertes (DW) gelegenen Worten des Signals (S) angibt. Die Ausführung der den bestimmten Werten des Signals (S) zugeordneten Verfahrensschritte (43, 49) wird dann zusätzlich von der Größe der Abweichung des Dominanzwertes (DW) von dem Grundwertebereich (GWMIN, GWMAX) abhängig gemacht, wenn der Häufigkeitswert (HW) wenigstens eine vorbestimmte Größe (H1, H2) erreicht. Ein bevorzugtes Anwendungsgebiet der Erfindung sind elektronische Steuerungs- und Regelungssysteme in Fahrzeugen.

Fig.1

Printed by Xerox (UK) Business Services
2.16.6/3.4

## Beschreibung

Die Erfindung betrifft ein Verfahren zur Verarbeitung von Signalen gemäß dem Patentanspruch 1. Das Verfahren wird vorzugsweise in einem geschlossenen Regelkreis verwendet.

Derartige Verfahren kommen beispielsweise in Regelungssystemen für Kraftfahrzeuge zum Einsatz. Als konkrete Beispiele seien Systeme zur Blockierverhinderung von Rädern eines Kraftfahrzeuges während eines Bremsvorganges oder zur Antriebsschlupfregelung der Antriebsräder eines Fahrzeuges beim Beschleunigen genannt. Bei derertigen Systemen werden in einem Regelungsverfahren die durch Drehgeschwindigkeitsfühler ermittelten Drehgeschwindigkeitswerte der Räder als Signale verarbeitet. Beim Auftreten bestimmter Unterschiede zwischen den Signalen werden in dem Regelungsverfahren bestimmte Verfahrensschritte ausgelost, durch die mittels einer Regelung unerwünschte, kritische Fahrzustände des Fahrzeuges vermieden werden sollen. Da es sich in diesem Falle um einen geschlossenen Regelkreis handelt, hat die Ausführung dieser Verfahrensschritte auch wiederum Auswirkungen auf die zuvor genannten Signale. So wird z. B. im Falle einer Antriebsschlupfregelung bei Erkennung eines durchdrehenden Rades die diesem Rad zugeordnete Bremseinrichtung betätigt, wodurch die Durchdrehneigung des Rades vermindert wird.

Es kommt jedoch auch vor, daß Unterschiede zwischen den Signalen auftreten, die nicht durch unerwünschte, kritische Fahrzustände hervorgerufen werden und die daher auch nicht zu einem Ansprechen der Regelung führen sollen. So werden z. B. durch unterschiedlich große Reifen oder Reifen mit unterschiedlichem Abnutzungsgrad voneinander abweichende Drehgeschwindigkeitssignale an den Drehgeschwindigkeitsfühlern hervorgerufen, ohne daß eine Blockierneigung oder ein Durchdrehen von Rädern auftritt.

Um ein unerwünschtes Ansprechen der Regelung aufgrund von den zuvor genannten Reifenunterschieden zu vermeiden, ist z. B. aus der DE 41 14 047 A1 ein elektronisches Brems- oder Anfahrregelsystem für Fahrzeuge bekannt, von dem nach Erkennung derartiger Unterschiede eine rechnerische Angleichung der Drehgeschwindigkeitssignale aneinander erfolgt. Hierbei wird über einen gewissen, aus Sicherheitsgründen relativ langen Zeitraum die Abweichung zwischen den Drehgeschwindigkeitssignalen beobachtet und nach Auswertung der beobachteten Signalverläufe entschieden, ob eine Abweichung aufgrund von Reifenunterschieden vorliegt. In diesem Fall wird im weiteren Betrieb des Systems das abweichende Drehgeschwindigkeitssignal rechnerisch einem anderen, als nicht abweichend betrachteten Drehgeschwindigkeitssignal angeglichen. Eine Abstufung dieser Angleichung in dem Sinne, daß die Signale relativ kurzfristig wenigstens zum Teil aneinander angeglichen werden, ist nicht vorgesehen.

Das zuvor anhand eines Beispiels beschriebene technische Problem tritt in allgemeiner Form immer dann auf, wenn in einem Verfahren zur Signalverarbeitung ein zu verarbeitendes Signal normalerweise Werte aufweist, die innerhalb eines bestimmten Wertebereiches, der als Grundwertebereich bezeichnet wird, liegen, und das Signal ausnahmsweise bestimmte Werte außerhalb des Grundwertebereiches annehmen kann, infolge dessen besondere Verfahrensschritte ausgeführt werden. Hierbei sollen die besonderen Verfahrensschritte jedoch nicht aufgrund einer unplausiblen Abweichung des Signals von dem Grundwertebereich, die z. B. durch eine fehlerhafte Signalkalibrierung oder durch Reifenunterschiede im Falle eines elektronischen Brems- oder Anfahrregelsystems für Fahrzeuge hervorgerufen werden kann, ausgeführt werden.

Der Erfindung liegt deshalb die Aufgabe zugrunde, eine wie zuvor beschriebene unplausible Abweichung des Signals von dem Grundwertebereich schnell zu erkennen und unerwünschte Auswirkungen dieser Abweichung frühzeitig zu vermindern bzw. ganz zu verhindern.

Diese Aufgabe wird durch die in dein Patentanspruch 1 angegebene Erfindung gelöst. Weiterbildungen und vorteilhafte Ausgestaltungen der Erfindung sind in den Unteransprüchen angegeben.

Als Signal wird in den folgenden Ausführungen der zeitliche Verlauf einer veränderbaren Größe bezeichnet, die zu jedem Zeitpunkt einen Amplitudenwert aufweist. Der Amplitudenwert wird als Wert des Signals bezeichnet. Im Falle eines zeitdiskreten Signals wird als Signal die Folge von einzelnen Amplitudenwerten bezeichnet.

Ein bevorzugtes Anwendungsgebiet der Erfindung sind elektronische Steuerungs- und Regelungssysteme in Fahrzeugen. Wie aus den Ausführungsbeispielen ersichtlich ist, kann die Erfindung auch vorteilhaft in anderen Bereichen der Technik eingesetzt werden.

Gemäß der Erfindung werden aus einem zu verarbeitenden ersten Signal als Dominanzwert ein relativ häufig auftretender Wert des ersten Signals sowie ein Häufigkeitswert ermittelt, der die Häufigkeit des Auftretens von in der Umgebung des Dominanzwertes gelegenen Werten des ersten Signals angibt. Die Ausführung der den bestimmten Werten des ersten Signals zugeordneten Verfahrensschritte wird dann zusätzlich von der Größe der Abweichung des Dominanzwertes von dem Grundwertebereich abhängig gemacht, wenn der Häufigkeitswert wenigstens eine vorbestimmte Größe erreicht.

Ein Vorteil der Erfindung besteht darin, daß mittels des Häufigkeitswertes eine Aussage über die Wahrscheinlichkeit einer unplausiblen Abweichung des ersten Signals von dem Grundwertebereich abgeleitet werden kann. Die Größe der unplausiblen Abweichung kann aus dem Dominanzwert abgeleitet werden. Eine Verminderung der unerwünschten Auswirkungen kann dann bei Erreichen einer vorbestimmten Wahrscheinlichkeit mittels dieser Größe der unplausiblen Abweichung durchgeführt werden.

In einer vorteilhaften Weiterbildung der Erfindung wird das erste Signal in einem geschlossenen Regelkreis verwendet. Hierbei ist das erste Signal aufgrund der Rückwirkung des geschlossenen Regelkreises durch die Ausführung bestimmter, den Werten des ersten Signals zugeordneter Verfahrensschritte wiederum beeinflußbar. Dies hat den Vorteil, daß ein längerfristiges Verharren des ersten Signals in einem bestimmten Wertebereich vermieden werden kann. Hierdurch ist die Erfindung unempfindlicher gegenüber Fehlansprechen aufgrund von in Wahrheit plausiblen, jedoch von dem Signalverhalten her als unplausibel zu vermutenden Werten des ersten Signals.

Die Erfindung kann in vorteilhafter Weise sowohl zur Verarbeitung von kontinuierlichen als auch von diskreten Signalen eingesetzt werden. Im Fall von zeitkontinuierlichen Signalen werden die Signalwerte durch Abtastung zu bestimmten Zeitpunkten ermittelt. Im Falle von zeitdiskreten Signalen besteht das Signal aus einer zeitlichen Abfolge von Einzelwerten, die direkt für das erfindungsgemäße Verfahren benutzt werden können. Falls das erfindungsgemäße Verfahren von einem Mikroprozessor ausgeführt wird, dann werden wertekontinuierliche Signale z. B. mittels eines Analog-/Digital-Wandlers in für den Mikroprozessor geeignete Digitalwerte umgewandelt. Anderenfalls können die wertekontinuierlichen Signale auch direkt verarbeitet werden.

Gemäß einer vorteilhaften Weiterbildung der Erfindung werden zur Beurteilung des ersten Signals Zeitabschnitte und Wertebereiche festgelegt, mittels derer auf einfache Weise eine Aussage über die Verteilung der Werte des ersten Signals bzw. bestimmter Häufigkeiten dabei vorgenommen werden kann. Hierbei wird der Wertebereich zu Beginn eines Zeitabschnittes jeweils neu in Abhängigkeit von dem dann vorliegenden Wert des ersten Signals, der als Vergleichswert verwendet wird, festgelegt. Bei der daraufhin folgenden Betrachtung der weiteren Werte des ersten Signals können die im regulären Fall eine vorbestimmte Zeitdauer aufweisenden Zeitabschnitte auch vorzeitig beendet werden, wenn sich der Wert des ersten Signals stark ändert, d.h. wenn einer der Werte den zuvor festgelegten Wertebereich verläßt. Hierdurch ist das erfindungsgemäße Verfahren auch bei dynamischen Signalverläufen vorteilhaft einsetzbar. Bei regulärem Ablauf eines Zeitabschnittes stellt der Vergleichswert einen Näherungswert für die in diesem Zeitabschnitt aufgetretenen Werte des ersten Signals dar.

In einer weiteren vorteilhaften Weiterbildung der Erfindung werden zur Bestimmung des Häufigkeitswertes ausschließlich die in regulär abgelaufenen Zeitabschnitten ermittelten Vergleichswerte berücksichtigt. Hierbei wird wiederum ein Wertebereich festgelegt, der in diesem Fall auf einen ersten berücksichtigten Vergleichswert, der als Vorzugswert verwendet wird, bezogen ist. Der Häufigkeitswert wird dann aufgrund der Anzahl der innerhalb dieses Wertebereiches gelegenen, berücksichtigten Vergleichswerte ermittelt. Hierdurch ist eine besonders einfache Art der Bestimmung des Häufigkeitswertes ohne eine aufwendige Speicherung einer großen Menge von Signalwerten aus der Vergangenheit möglich, wodurch das erfindungsgemäße Verfahren mit sehr wenig Speicher- und Rechenaufwand durchgeführt werden kann. Ein weiterer Vorteil ist, daß durch die Festlegung geeigneter Werte für die Länge der Zeitabschnitte und die Größe der Wertebereiche eine einfache Anpaßbarkeit der Erfindung an sehr unterschiedliche Einsatzgebiete und Signalformen möglich ist.

In einer vorteilhaften Weiterbildung der Erfindung wird der zuvor beschriebene Vergleichswert direkt als Dominanzwert verwendet. Hierdurch kann das erfindungsgemäße Verfahren sehr einfach realisiert werden und der Speicheraufwand gering gehalten werden.

In einer weiteren vorteilhaften Weiterbildung der Erfindung wird der jeweilige Vergleichswert nicht direkt als Dominanzwert verwendet, sondern beim Auftreten bestimmter Kombinationen des Häufigkeitswertes und von internen Zustandsgrößen des Verfahrens als Dominanzwert übernommen. Im Gegensatz zu der zuvor genannten Weiterbildung der Erfindung ist diese Weiterbildung besonders vorteilhaft einsetzbar, wenn die Tolerierbarkeitsgrenze eines unplausiblen Signalverhaltens von der Erfüllung bestimmter verfahrensinterner Bedingungen, wie z. B. dem Vorhandensein eines Regelungseingriffs, abhängt. Durch die Verknüpfung der internen Zustandsgrößen mit dem Häufigkeitswert ist zudem eine relativ einfache Abstufbarkeit bei den Reaktionen auf unplausible Signale möglich. So kann z. B. ein als störend empfundener, jedoch nicht sicherheitskritischer Verfahrensschritt schon beim Auftreten eines kleinen Häufigkeitswertes unterbunden werden, während ein sicherheitsrelevanter Verfahrensschritt erst beim Auftreten eines größeren Häufigkeitswertes, der auf eine größere Wahrscheinlichkeit eines unplausiblen Signals hindeutet, unterdrückt werden würde.

Bestimmten Werten des ersten Signals außerhalb des Grundwertebereichs sind Verfahrensschritte zugeordnet, die bei Auftreten dieser Werte ausgeführt werden. In einer vorteilhaften Weiterbildung der Erfindung wird hierfür ein Schwellenwert verwendet, bei dessen Über- bzw. Unterschreitung durch das erste Signal die Ausführung der Verfahrensschritte ausgelöst wird. Es ist dabei je nach Anwendungsfall festzulegen, ob entweder die Überschreitung oder stattdessen die Unterschreitung des Schwellenwerts als Kriterium zur Ausführung der Verfahrensschritte verwendet werden soll. Es ist auch möglich, einen Verfahrensschritt bei einer Überschreitung und einen anderen Verfahrensschritt bei einer Unterschreitung auszuführen.

Durch diese Weiterbildung kann in besonders einfacher Weise eine Verminderung unerwünschter Auswirkungen eines unplausiblen Signalverhaltens durch eine rechnerische Anpassung der Werte des ersten Signals oder auch durch eine Anpassung des Schwellenwertes erreicht werden, wobei beide Anpassungen mit dem Ziel einer Vergrößerung des Abstandes zwischen dem ersten Signal und dem Schwellenwert zum Ausgleich des unplausiblen Signalverhaltens vorgenommen werden.

In einer ersten vorteilhaften Ausgestaltung dieser Weiterbildung werden dabei die Werte des ersten Signals rechnerisch in zunehmendem Maß angepaßt, je größer die Abweichung des Dominanzwertes von dem Grundwertebereich ist. Wenn eine Überschreitung des Schwellenwertes als Kriterium für die Ausführung der Verfahrensschritte verwendet wird, dann werden die Werte des ersten Signals verkleinert. Wenn anderenfalls eine Unterschreitung des Schwellenwertes als Kriterium für die Ausführung der Verfahrensschritte verwendet wird, dann werden die Werte des ersten Signals vergrößert.

In einer zweiten vorteilhaften Ausgestaltung dieser Weiterbildung werden nicht die Werte des Signals angepaßt, sondern der Schwellenwert. Die Art der Anpassung erfolgt dabei ebenfalls unter Berücksichtigung des Kriteriums für die Ausführung der Verfahrensschritte, jedoch in entgegengesetzter Weise zu der Anpassung der Werte des ersten Signals.

Auch eine Kombination dieser beiden Ausgestaltungen der Erfindung ist vorteilhaft.

In einer vorteilhaften Weiterbildung der Erfindung wird der Häufigkeitswert beim Auftreten von in dem Vorzugswertebereich gelegenen Vergleichswerten automatisch erhöht und anderenfalls automatisch verringert, sofern es sich hierbei um berücksichtigte Vergleichswerte handelt. In vorteilhafter Weise, insbesondere bei Verwendung der Erfindung in einem digitalen, elektronischen System, wird zur Bestimmung des Häufigkeitswertes ein Zähler verwendet, dessen Zählerstand den Häufigkeitswert darstellt. Derartige Zähler können z. B. durch Zählimpulse ihren Zählerstand verändern. Bei Verwendung eines Mikroprozessors zur Ausführung des erfindungsgemäßen Verfahrens kann auch ein in dem Mikroprozessor oder einem daran angeschlossenen Speicherbaustein angeordnetes Zählregister als Zähler eingesetzt werden.

Als Kriterium zum Verändern des Zählerstandes wird in jedem Zeitabschnitt einmal geprüft, ob der in diesem Zeitabschnitt bestimmte Vergleichswert innerhalb oder außerhalb des Vorzugswertebereiches angeordnet ist. Hierdurch wird der Vorteil erreicht, daß mit einfachen Mitteln, die in derzeit üblichen Einrichtungen zur Ausführung gattungsgemäßer Verfahren im allgemeinen vorhanden sind, eine Bestimmung des Häufigkeitswertes erfolgen kann.

In einer weiteren vorteilhaften Weiterbildung der Erfindung wird der Vorzugswert in einem Zeitabschnitt bestimmt, in dem der Häufigkeitswert wenigstens näherungsweise den Wert Null aufweist. Da für die Bestimmung des Häufigkeitswertes ein Vorzugswertebereich benutzt wird, der aufgrund eines ersten Vorzugswertes festgelegt wird, und zudem der Dominanzwert von dem Vorzugswert abhängig ist, wird durch diese Weiterbildung einerseits der Vorteil erreicht, daß die gemeinsam für die Ausführung des erfindungsgemäßen Verfahrens benötigten Daten (Häufigkeitswert und Dominanzwert) zeitlich miteinander korrelieren, so daß zu jedem Zeitpunkt relevante Daten zur Verfügung stehen. Andererseits hat diese Weiterbildung den weiteren Vorteil, daß bei der Ausführung des Verfahrens nicht nur ein einziges Mal ein Vorzugswert festgelegt wird, z. B. nach dem Einschalten der Einrichtung zur Ausführung des erfindungsgemäßen Verfahrens, sondern daß in Abhängigkeit von den Werten des ersten Signals prinzipiell zu jedem Zeitpunkt erneut ein Vorzugswert festgelegt werden kann. Hierdurch kann eine automatische Anpassung bei der Signalverarbeitung an den Signalverlauf erfolgen.

In einer vorteilhaften Weiterbildung der Erfindung stellt das erste Signal den Unterschied zwischen einem zweiten und einem dritten Signal dar. Insbesondere bei Verwendung des Verfahrens in einer Steuer- oder Regelanordnung in einem Kraftfahrzeug können als zweites und drittes Signal dann Geschwindigkeitssignale verwendet werden, die im Rahmen der Ausführung des Verfahrens miteinander verglichen werden müssen. In besonders vorteilhafter Weise kann hierbei das erste Signal als ein Schlupfsignal bestimmt werden, das beispielsweise den Antriebs- oder Bremsschlupf eines Rades im Vergleich zur Fahrzeuggeschwindigkeit darstellt. Hierbei kann das erste Signal als ein absoluter Unterschied bzw. absoluter Schlupfwert als Differenz zwischen dem zweiten und dem dritten Signal oder als relativer Unterschied bzw. relativer Schlupfwert als Quotient hieraus bestimmt werden. Auch eine Kombination dieser Ausgestaltungen der Erfindung ist vorteilhaft.

Die Erfindung wird anhand zweier Ausführungsbeispiele näher erläutert.

In dem ersten Ausführungsbeispiel wird eine Verwendung des erfindungsgemäßen Verfahrens in einer Regelungseinrichtung für ein Kraftfahrzeug unter Zuhilfenahme von Zeichnungen beschrieben. In dein zweiten Ausführungsbeispiel wird die Verwendung der Erfindung in einer Regelungseinrichtung für ein Segelboot erläutert.

Es zeigen:

Fig. 1          eine Darstellung der die Erfindung betreffenden Signale einer Einrichtung zur Regelung einer Antriebs- und Bremsanlage eines Fahrzeuges als Blockschaltbild und

Fig. 2          eine Übersicht über das erfindungsgemäße Verfahrens als Blockschaltbild und

Fig. 3 bis 6 Darstellungen der Verfahrensabschnitte (12, 13, 14) des Verfahrens als
Flußdiagramme.

In den Figuren werden gleiche Bezugszeichen für
einander entsprechende Teile, Signale und Verfahrensabschnitte verwendet.

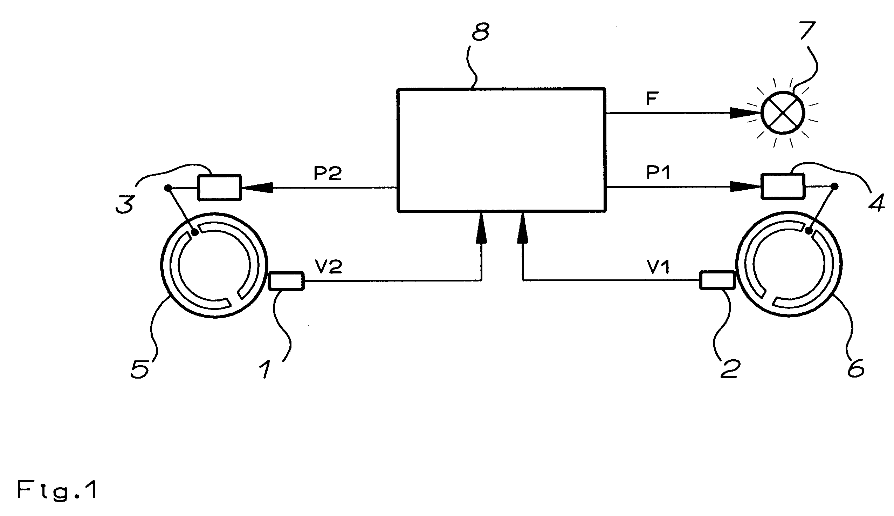

In der Fig. 1 sind die die Erfindung betreffenden
Komponenten einer Bremsanlage eines Fahrzeuges
dargestellt. Ein derartiges Fahrzeug weist üblicherweise
noch eine Antriebseinrichtung, die z. B. aus einem
Motor, einem Getriebe und einer Antriebswelle besteht,
auf. In dem Ausführungsbeispiel gemäß Fig. 1 wird
davon ausgegangen, daß die nicht dargestellte
Antriebseinrichtung dazu geeignet ist, das Rad (5)
anzutreiben. Das Rad (6) dagegen wird nicht angetrieben. Im Falle eines Lastkraftwagens mit üblicher
Antriebsauslegung ist das Rad (5) dann ein Hinterrad
und das Rad (6) ein Vorderrad.

Die Räder (5, 6) können über ihnen zugeordnete
Bremseinrichtungen (3, 4) mit Bremskräften beaufschlagt werden. Hierdurch kann das Fahrzeug abgebremst werden. Als Medium zur Kraftbeaufschlagung
kann ein Druckmittel verwendet werden, wie z. B.
Drucköl oder Druckluft. Im folgenden Ausführungsbeispiel wird eine Verwendung von Druckluft angenommen.

Die Bremseinrichtungen können in üblicher Weise
als druckluftbetätigbare Trommel- oder Scheibenbremsen ausgebildet sein, die entweder über pneumatische
Drucksignale (P1, P2) oder bei Verwendung in einem
elektronisch gesteuerten Bremssystem (EBS) durch
elektrische Signale betätigt werden. Je nach Art der
Bremsanlage können die Bremseinrichtungen (3, 4)
mechanische, pneumatische und elektronische Komponenten aufweisen. Die Betätigungssignale (P1, P2) für
die Bremseinrichtungen (3, 4) werden von einer Steuereinrichtung (8) erzeugt, die vorzugsweise als ein elektronisches Steuergerät mit einem ein Steuerprogramm
ausführenden Mikroprozessor ausgebildet ist. Das
erfindungsgemäße Verfahren ist dann als Teil des Steuerprogramms ausgeführt.

Als Verfahrensschritte zur geeigneten Bestimmung
der Betätigungssignale (P1, P2) sind in dem Steuerprogramm unter anderem auch Programmabschnitte enthalten, die eine Bremsschlupfregelung zur Vermeidung
des Blockierens von Rädern und eine Antriebsschlupfregelung zur Steuerung des bzw. der Antriebsräder in
Abhängigkeit von den Drehgeschwindigkeitssignalen
der Räder und gegebenenfalls einem Fahrzeuggeschwindigkeitssignal bewirken. Desweiteren kann das
Steuerprogramm zusätzlich aus Sicherheitsgründen
eine Fehlererkennungsfunktion enthalten, durch die bei
Fehlern in der Bremsanlage oder bei unplausiblen Eingangssignalen ein Fehlersignal (F) ausgelöst wird.

Daher enthält die Anlage gemäß Fig. 1 außerdem
noch eine Fehleranzeigeeinrichtung (7), die mit dem
Fehlersignal (F) beaufschlagt wird und z. B. als Warnlampe ausgebildet sein kann. Zur Erzeugung der Drehgeschwindigkeitssignale der Räder (5, 6) sind im
Bereich der Räder angeordnete, die Drehgeschwindigkeit ermittelnde Sensoren (1, 2) vorhanden, die Drehgeschwindigkeitssignale (V2, V1) an das Steuergerät (8)
abgeben. Die Sensoren (1, 2) können in bekannter
Weise als elektromagnetisch wirkende Impulsdrehzahlgeber ausgebildet sein, die mit jeweils einem an der
jeweiligen Radaufhängung der Räder (5, 6) angeordneten Zahnrad in Wirkverbindung stehen.

Das Steuergerät (8) erzeugt in Abhängigkeit von
den Drehgeschwindigkeitssignalen (V1, V2) die Betätigungssignale (P1, P2) zur Steuerung der Bremskraft an
den Bremseinrichtungen (3, 4) und das Fehlersignal (F)
zur Ansteuerung der Fehleranzeigeeinrichtung (7).

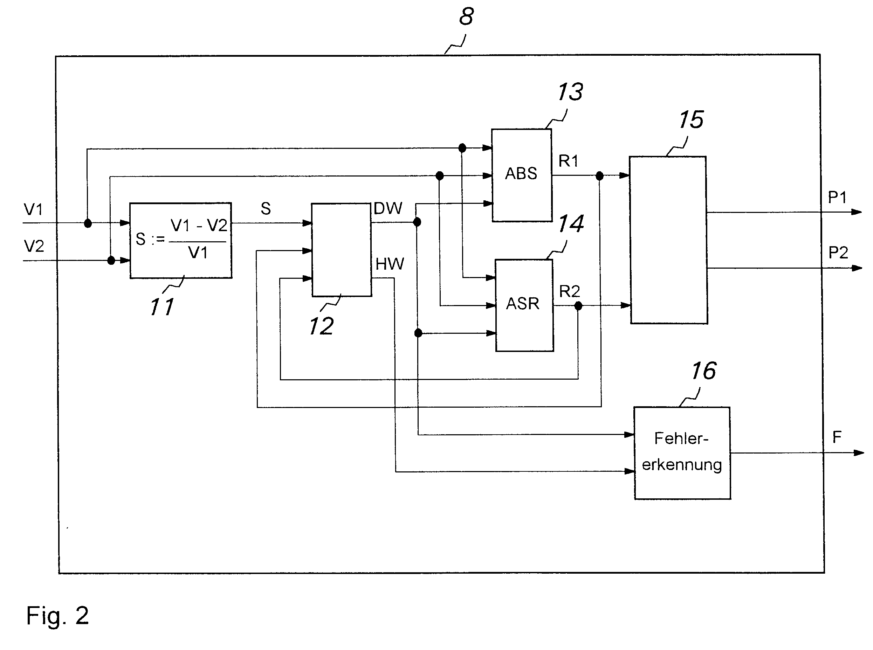

In der Fig. 2 wird als Blockschaltbild schematisch
das Zusammenwirken der die Erfindung betreffenden
Programmabschnitte in dem Steuergerät (8) dargestellt.
Hierbei stellen die Funktionsblöcke (11, 12, 13, 14, 15,
16) einzelne Verfahrensabschnitte bzw. Programmabschnitte des Steuerprogrammes für den Mikroprozessor
dar. Neben den dort dargestellten Programmabschnitten kann das Steuerprogramm noch weitere Programmabschnitte enthalten, z. B. zur Fehlerdiagnose oder zur
Geschwindigkeitsregelung des Fahrzeuges. In den
Funktionsblöcken (11, 12, 13, 14, 15, 16) wird in Abhängigkeit von einem oder mehreren Eingangssignalen
durch Signalverarbeitung jeweils eines oder mehrere
Ausgangssignale erzeugt.

In dem Block (11) wird aus den Drehgeschwindigkeitssignalen (V1, V2) ein relatives Schlupfsignal (S)
berechnet, indem zunächst die Differenz der Drehgeschwindigkeitssignale (V1, V2) gebildet wird und
anschließend diese Differenz durch eines der beiden
Drehgeschwindigkeitssignale (V1) dividiert wird. Das
Schlupfsignal (S) weist somit in einem häufig vorliegenden Betriebszustand des Fahrzeuges, in dem weder
Bremsschlupf noch Antriebsschlupf auftreten und die
Sensoren (1, 2) jeweils plausible Drehgeschwindigkeitssignale (V1, V2) liefern, näherungsweise den Wert Null
auf.

Aus verschiedenen Gründen kann der Wert des
Schlupfsignals (S) jedoch von dem exakten Wert Null
abweichen, ohne daß Antriebs- oder Bremsschlupf vorliegt. Gründe hierfür sind z. B. Fertigungstoleranzen bei
den Fahrzeugreifen, unterschiedlicher Abnutzungsgrad
der Fahrzeugreifen oder unterschiedliche Zähnezahlen
bei den mit den Sensoren (1, 2) in Wirkverbindung stehenden Zahnrädern.

Hierbei sind bestimmte, geringfügige Abweichungen von dem Wert Null, die durch zulässige Fertigungstoleranzen der Fahrzeugreifen beispielsweise in der
Größenordnung von einem Prozent entstehen, tolerierbar. Der Bereich der tolerierbaren Werte wird als
Grundwertebereich (GWMIN, GWMAX) des Schlupfsignals (S) festgelegt, wobei das Schlupfsignal (S) das erfindungsgemäße erste Signal darstellt.

Größere Abweichungen des Schlupfsignals (S) von dem Wert Null können auf unplausiblen Drehgeschwindigkeitssignalen (V1, V2) beruhen, die durch unzulässig große Reifentoleranzen, z. B. unterschiedliche Reifentypen, oder durch verschiedene Zähnezahlen der Zahnräder hervorgerufen werden. Die größeren Abweichungen des Schlupfsignals (S) von dem Wert Null können aber auch von Blockier- oder Durchdrehtendenzen der Räder (5, 6) hervorgerufen werden. Hierbei soll im Falle von unplausiblen Drehgeschwindigkeitssignalen (V1, V2), die ihrerseits zu einem unplausiblen Signalverhalten des Schlupfsignals (S) führen, keine unerwünschte Brems- oder Antriebsschlupfregelung durchgeführt werden. Andererseits soll bei einer Blockiertendenz oder einem Durchdrehen eines Rades unbedingt ein kritischer Fahrzustand vermieden werden.

Zur Erkennung von unplausiblem Signalverhalten des Schlupfsignals (S) und zur Unterscheidung zwischen unerwünschten oder erwünschten Brems- oder Antriebsschlupfregelungen ist der Block (12) vorgesehen. Dort werden in Abhängigkeit von dem Schlupfsignal (S) und von weiteren Signalen (R1, R2), die interne Zustandsgrößen des Verfahrens repräsentieren, als Ausgangssignale ein Dominanzwert (DW) und ein Häufigkeitswert (HW) erzeugt. Der Dominanzwert (DW) stellt ein Maß für die Abweichung des Schlupfsignals (S) von dem Wert Null bzw. von der Mitte des Grundwertebereiches dar. Der Häufigkeitswert (HW) gibt die Häufigkeit des Auftretens von in der Umgebung des Dominanzwertes gelegenen Werten des Schlupfsignals (S) an und stellt somit eine Wahrscheinlichkeit dar, mit der der Dominanzwert (DW1) die Abweichung des Schlupfsignals (S) von dem Grundwertebereich aufgrund von unplausiblen Drehgeschwindigkeitssignalen (V1, V2) sicher angibt.

Der Dominanzwert (DW) wird den Blöcken (13, 14) zugeführt. Zusätzlich wird der Dominanzwert (DW) zusammen mit dein Häufigkeitswert (HW) dem Block (16) als Eingangssignal zugeführt. Der Block (16) dient der Fehlererkennung und erzeugt seinerseits das Fehlersignal (F).

In dem Block (13) wird aufgrund des von dem Block (12) abgegebenen Signals (DW) sowie aufgrund der Drehgeschwindigkeitssignale (V1, V2) ein Reglerausgangswert (R1) derart bestimmt, daß ein Blockieren eines oder mehrerer Räder nach Art eines Antiblockiersystems (ABS) vermieden wird. In diesem Ausführungsbeispiel wird zur Vereinfachung nur das Blockieren des Rades (6) betrachtet. Selbstverständlich kann die Blockierverhinderung auch für die weiteren Räder des Fahrzeuges durchgeführt werden. In diesem Fall sind den Blöcken (11, 13) gegebenenfalls noch weitere Drehgeschwindigkeitssignale als Eingangssignale zuzuführen.

Zur Vermeidung von sehr großem Antriebsschlupf wird in dem Block (14) zusätzlich ein weiterer Reglerausgangswert (R2) zum Zwecke der Antriebsschlupfregelung bestimmt. Hierbei werden als Eingangssignale die Drehgeschwindigkeitssignale (V1, V2) sowie der Dominanzwert (DW1) berücksichtigt.

Die in den Blöcken (13, 14) ermittelten Reglerausgangswerte (R1, R2) werden einerseits wiederum dem Block (12) zugeführt. Andererseits werden diese Signale, die nicht einzelnen Rädern des Fahrzeuges, sondern den Regelfunktionen des Steuergerätes (8) zugeordnet sind, einem Block (15) zugeführt, in dem eine Bestimmung der den Rädern (5, 6) zugeordneten Betätigungssignale (P2, P1) erfolgt. Hierbei wird bei einer Bremsschlupfregelung die Bremskraft üblicherweise reduziert und bei einer Antriebsschlupfregelung ein schnell durchdrehendes Rad durch eine Erhöhung der Bremskraft wieder abgebremst. Es ist auch möglich, den Reglerausgangswert (R2) der Antriebseinrichtung des Fahrzeuges zuzuführen, so daß das Durchdrehen des Rades auch durch eine Verringerung der Antriebskraft erfolgen kann.

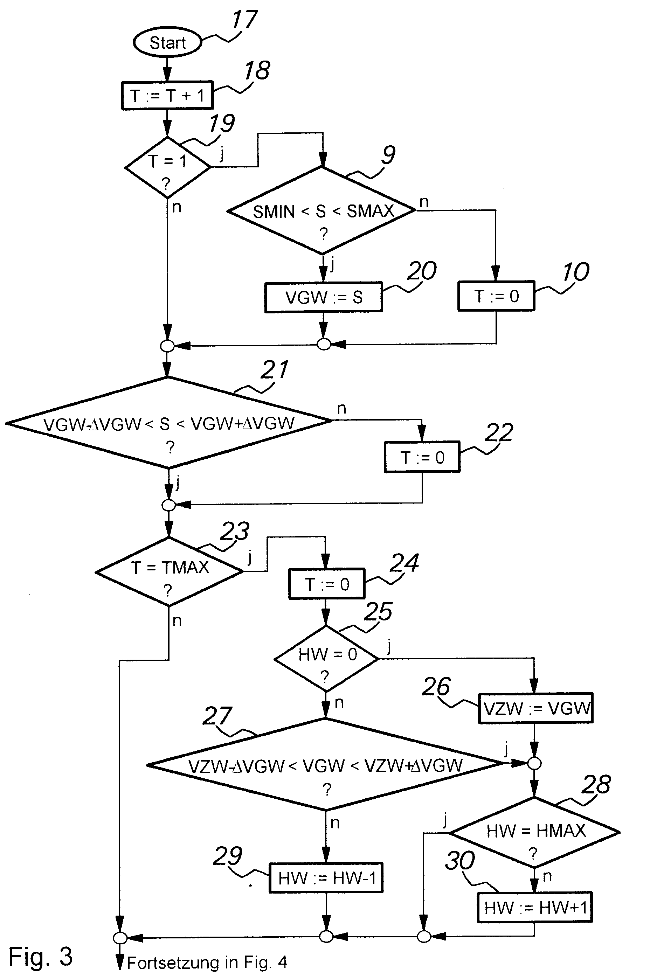

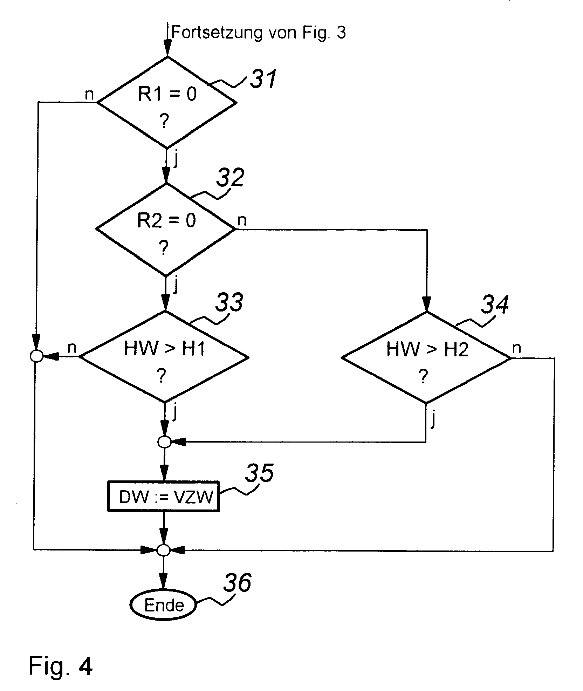

In den Fig. 3 und 4 ist der in dem Block (12) enthaltene Programmabschnitt detailliert als Flußdiagramm dargestellt. Der Programmabschnitt beginnt in der Fig. 3 mit dem Block (17). In dem darauf folgenden Zuweisungsblock (18) wird ein Zeitzähler (T) inkrementiert. Der Zeitzähler (T) dient zur Festlegung der Zeitabschnitte zur Beurteilung des Schlupfsignals (S). Nach dem Einschalten der Steuereinrichtung (8) hat der Zeitzähler (T) zunächst den Anfangswert Null. In dem Verzweigungsblock (19) wird geprüft, ob der derzeitige Zeitabschnitt gerade beginnt. In diesem Fall weist der Zeitzähler (T) den Wert 1 auf. Wenn der Zeitabschnitt gerade beginnt, dann wird in einem Verzweigungsblock (9) geprüft, ob der Wert des Schlupfsignals (S) innerhalb eines für dieses Signal festgelegten Zulässigkeitsbereiches, der sich von einem unteren Wert (SMIN) bis zu einem oberen Wert (SMAX) erstreckt, liegt. Wenn dies der Fall ist, dann wird in dem Zuweisungsblock (20) der Wert (S) als Vergleichswert (VGW) übernommen. Anderenfalls wird durch Zurücksetzen des Zeitzählers (T) auf den Wert Null in dem Zuweisungsblock (10) der gerade begonnene Zeitabschnitt vorzeitig beendet. Geeignete Werte zur Festlegung des Zulässigkeitsbereiches sind z. B. SMIN = -0,6 und SMAX = 0,6.

In dem Verzweigungsblock (21) wird sodann überprüft, ob der Wert (S) in einem bestimmten Bereich (-ΔVGW, +ΔVGW) in der Nähe des Vergleichswertes (VGW) angeordnet ist. Wenn dies nicht der Fall ist, dann wird in einem Zuweisungsblock (22) der Zeitabschnitt vorzeitig beendet, indem der Zeitzähler (T) auf seinen Anfangswert Null zurückgesetzt wird.

In dem Verzweigungsblock (23) wird überprüft, ob das reguläre Ende des Zeitabschnittes erreicht worden ist. Hierfür wird der Zeitzähler (T) mit einer Zeitkonstante (TMAX) verglichen. Ein geeigneter Wert für TMAX ist z. B. 500 ms bei einer wiederholten Ausführung des erfindungsgemäßen Verfahrens im Zeitabstand von 5 ms. Wenn der Zeitabschnitt regulär beendet

wird ( T = TMAX ), dann wird in einem Zuweisungsblock (24) der Zeitzähler (T) auf seinen Anfangswert Null zurückgesetzt.

Daraufhin wird in einem Verzweigungsblock (25) überprüft, ob es sich um das Ende des ersten regulär beendeten Zeitabschnittes handelt. In diesem Fall weist der Häufigkeitswert (HW) den Wert Null auf. Dann wird in dem Zuweisungsblock (26) der Vorzugswert (VZW) auf den Vergleichswert (VGW) gesetzt. Hierauf wird nach Überprüfung des Häufigkeitswertes (HW) auf Erreichen eines Maximalwertes (HMAX) in dem Verzweigungsblock (28) der Häufigkeitswert (HW) in dem Zuweisungsblock (30) inkrementiert, wenn der Maximalwert (HMAX) noch nicht erreicht worden ist.

Wenn jedoch in dem Verzweigungsblock (25) die Überprüfung negativ ausfällt, dann wird in einem weiteren Verzweigungsblock (27) überprüft, ob der Vergleichswert (VGW) in einem Bereich (-ΔVGW, +ΔVGW) in der Nähe des Vorzugswertes (VZW) angeordnet ist. Wenn der Vergleichswert in dem Vorzugswertebereich liegt, dann wird in den Blöcken (28, 30) ebenfalls der Häufigkeitswert (HW) inkrementiert. Anderenfalls wird der Häufigkeitswert (HW) in dem Zuweisungsblock (29) dekrementiert. Es ist vorteilhaft, in den Blöcken (21, 27) die Bereiche (Vergleichswertebereich und Vorzugswertebereich) gleich groß zu wählen.

Der hier beschriebene Programmabschnitt gemäß Block (12) wird daraufhin in der Fig. 4 mit dein Verzweigungsblock (31) fortgesetzt.

In den Verzweigungsblöcken (31, 32) wird dann unter Heranziehung der in den Blöcken (13, 14) erzeugten Reglerausgangswerte (R1, R2) überprüft, ob ein Regelungseingriff der jeweiligen Regelungsfunktion (ABS, ASR) vorliegt. Dabei wird angenommen, daß bei inaktiver Regelungsfunktion der jeweilige Reglerausgangswert (R1, R2) den Wert Null aufweist.

Von dem Verzweigungsblock (31) wird beim Vorliegen eines Regelungseingriffs der ABS-Funktion (R1 ≠ 0) direkt zu dem Block (36) verzweigt, womit dieser Programmabschnitt endet. Unabhängig vom gerade vorhandenen Häufigkeitswert (HW) bleibt der Dominanzwert (DW) dabei unbeeinflußt.

Wenn kein Regelungseingriff der ABS-Funktion (R1 = 0) vorliegt, wird in dem Verzweigungsblock (32) das Vorliegen eines Regelungseingriffs der ASR-Funktion überprüft. Abhängig vom Ergebnis dieser Überprüfung wird der Häufigkeitswert (HW) in den Verzweigungsblöcken (33, 34) auf Überschreitung bestimmter Grenzwerte (H1, H2) hin abgefragt. Hierbei wird außerhalb des Regelungseingriffs der ASR-Funktion (R2 = 0) ein relativ kleiner Grenzwert (H1) und während des Regelungseingriffs der ASR-Funktion (R2 ≠ 0) ein im Vergleich hierzu größerer Grenzwert (H2) verwendet. Hierdurch kann vor einem Regelungseingriff ein unerwünscht es Ansprechen der Regelung relativ zuverlässig vermieden werden. Eine bereits laufende Regelung wird dagegen nicht ohne weiteres beendet.

Bei Überschreitung des entsprechenden Grenzwertes (H1, H2) durch den Häufigkeitswert (HW) wird in einem Zuweisungsblock (35) der Dominanzwert (DW) auf den Vorzugswert (VZW) gesetzt. Daraufhin endet dieser Programmabschnitt in dem Block (36).

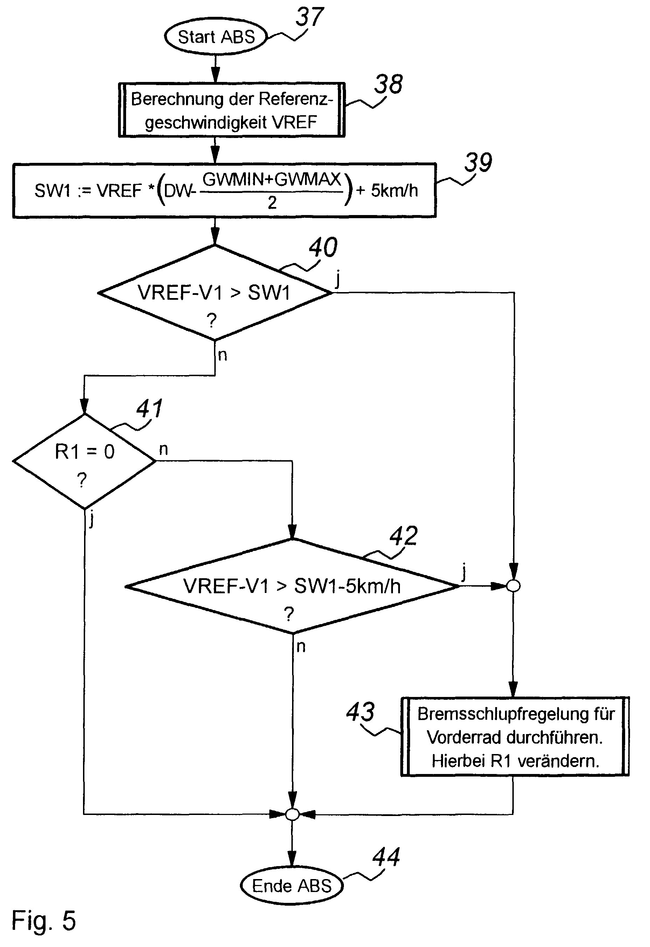

In der Fig. 5 ist die Verwendung der Ausgangssignale des Blockes (12) im Falle einer Bremsssshlupfregelung zur Vermeidung des Blockierens von Rädern (ABS) als Flußdiagramm dargestellt. Der Einfachheit halber wird nur die Regelung für das Rad (6) betrachtet. Dieser Programmabschnitt ist in der Fig. 2 mit dem Block (13) dargestellt. Er beginnt mit dem Block (37).

In einem Unterprogrammblock (38) wird eine sogenannte Referenzgeschwindigkeit (VREF) bestimmt, die die Fahrzeuggeschwindigkeit repräsentiert und als weiteres Kriterium zur Beurteilung der Notwendigkeit einer Bremsschlupfregelung herangezogen wird. Die Berechnung der Referenzgeschwindigkeit (VREF) kann in einer für Antiblockiersysteme üblichen Weise vorgenommen werden, die z. B. aus der DE 40 16 668 C2 bekannt ist. Hierbei werden zumindest die Drehgeschwindigkeitssignale (V1, V2) und gegebenenfalls noch Drehgeschwindigkeitssignale weiterer Räder für die Berechnung berücksichtigt. Eventuelle Unplausibilitäten in diesen Drehgeschwindigkeitssignalen haben somit auch eine Auswirkung auf die Referenzgeschwindigkeit (VREF).

Alternativ kann auch ein von einem Fahrzeuggeschwindigkeitssensor ermitteltes Fahrzeuggeschwindigkeitssignal statt der Referenzgeschwindigkeit verwendet werden.

In einem Zuweisungsblock (39) wird ein Schwellenwert (SW1) bestimmt, der als Kriterium für die Notwendigkeit einer Bremsschlupfregelung, z. B. wegen des Blockierens eines Rades, herangezogen wird. Der Schwellenwert (SW1) wird hierbei ausgehend von einem Basiswert (5 Km/h) linear mit der Abweichung des Dominanzwertes (DW) von dem Mittelwert des Grundwertebereiches und mit dem Häufigkeitswert (HW) vergrößert.

In einem Verzweigungsblock (40) wird sodann geprüft, ob das Drehgeschwindigkeitssignal (V1) die Referenzgeschwindigkeit (VREF) in einem größeren Maße unterschreitet als von dem Schwellenwert (SW1) angegeben. Wenn dies der Fall ist, dann ist eine Bremsschlupfregelung zur Erhaltung der Fahrsicherheit erforderlich. Diese Bremsschlupfregelung wird in dem Unterprogrammblock (43) durchgeführt und hier nicht näher erläutert. Im Rahmen der Bremsschlupfregelung wird zumindest der Reglerausgangswert (R1) derart verändert, daß er von dem Wert Null abweichen kann. Wenn im Rahmen der Bremsschlupfregelung der Reglerausgangswert (R1) wieder den Wert Null erreichen sollte, endet die Bremsschlupfregelung.

Wenn allerdings in dem Verzweigungsblock (40) der Schwellenwert (SW1) nicht überschritten wird, dann wird in einem Verzweigungsblock (41) überprüft, ob eine Bremsschlupfregelung bereits begonnen wurde (R1 ≠ 0) oder nicht (R1 = 0). Im letzteren Fall wird in dem Verzweigungsblock (42) eine zu dem Verzweigungsblock (40) analoge Überprüfung durchgeführt, jedoch mit einem verkleinerten Schwellenwert. Bei Überschreitung dieses verkleinerten Schwellenwertes wird ebenfalls mit dem Block (43) fortgefahren. Durch die Verwendung eines verkleinerten Schwellenwertes wird eine bereits begonnene Bremsschlupfregelung nicht direkt bei Unterschreitung des Schwellenwertes (SW1) in dem Verzweigungsblock (40) wieder beendet. Die unterschiedlichen Schwellenwerte in den Blöcken (40, 42) stellen somit eine Art Hysterese dar.

Die Blöcke (41, 42, 43) münden alle in den Block (44), mit dem dieser Programmabschnitt endet.

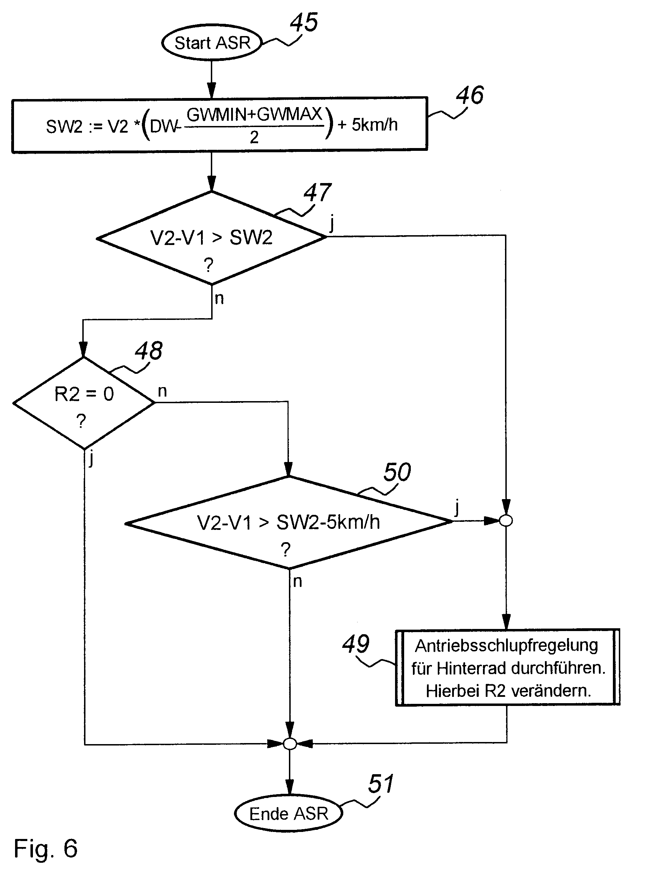

In analoger Weise wie in der Fig. 5 wird in der Fig. 6 ein Programmabschnitt zur Antriebsschlupfregelung dargestellt. Hierbei werden ebenfalls nur die die Erfindung betreffenden Verfahrensschritte im Detail beschrieben und das in bekannter Weise realisierte Regelungsverfahren zur Antriebsschlupfregelung nicht näher erläutert. Es wird in diesem Beispiel eine Antriebsschlupfregelung für das angetriebene Rad (5) angenommen.

In gleicher Weise wie in dem Block (39) der Fig. 4 wird in dem Zuweisungsblock (46) ein Schwellenwert (SW2) berechnet. Die Art der Berechnung muß gegebenenfalls den jeweiligen Erfordernissen angepaßt werden. Die Schwellenwerte (SW1, SW2) können daher auch auf unterschiedliche Art und Weise bestimmt werden.

In einem Verzweigungsblock (47) wird sodann geprüft, ob das Drehgeschwindigkeitssignal (V2) des angetriebenen Rades (5) das Drehgeschwindigkeitssignal (V1) des nicht angetriebenen Rades (6) in einem größeren Maße unterschreitet als von dem Schwellenwert (SW2) angegeben. Wenn dies der Fall ist, dann ist eine Antriebsschlupfregelung zur Erhaltung der Fahrsicherheit oder zur Erzielung einer Anfahr-Beschleunigung erforderlich. Diese Antriebsschlupfregelung wird in dem Unterprogrammblock (49) durchgeführt und hier nicht näher erläutert. Im Rahmen der Antriebsschlupfregelung wird zumindest der Reglerausgangswert (R2) derart verändert, daß er von dem Wert Null abweichen kann. Wenn im Rahmen der Antriebsschlupfregelung der Reglerausgangswert (R2) wieder den Wert Null erreichen sollte, endet die Antriebsschlupfregelung.

Wenn allerdings in dem Verzweigungsblock (47) der Schwellenwert (SW2) nicht überschritten wird, dann wird in einem Verzweigungsblock (48) überprüft, ob eine Antriebsschlupfregelung bereits begonnen wurde (R2 ≠ 0) oder nicht (R2 = 0). Im letzteren Fall wird in dem Verzweigungsblock (50) eine zu dem Verzweigungsblock (47) analoge Überprüfung durchgeführt, jedoch mit einem verkleinerten Schwellenwert. Bei Überschreitung dieses verkleinerten Schwellenwertes wird ebenfalls mit dem Block (49) fortgefahren. Durch die Verwendung eines verkleinerten Schwellenwertes wird eine bereits begonnene Antriebsschlupfregelung nicht direkt bei Unterschreitung des Schwellenwertes (SW2) in dem Verzweigungsblock (47) wieder beendet. Die unterschiedlichen Schwellenwerte in den Blöcken (47, 50) stellen somit eine Art Hysterese dar.

Die Blöcke (48, 49, 50) münden alle in den Block (51), mit dem dieser Programmabschnitt endet.

Eine geeignete Funktion zur Fehlererkennung gemäß dem Block (16) weist vorzugsweise einen Verfahrensschritt auf, in dem sowohl der Dominanzwert (DW) als auch der Häufigkeitswert (HW) mit ihnen jeweils zugeordneten Vergleichswerten verglichen werden. Im Falle einer Überschreitung dieser Vergleichswerte wird dann das Fehlersignal (F) auf einen Wert gesetzt, mittels dessen die Fehleranzeigeeinrichtung (7) aktiviert wird und dem Fahrer des Fahrzeuges der Fehlerzustand signalisiert wird. Es ist auch möglich, zur Erzeugung des Fehlersignals (F) den Dominanzwert (DW) rechnerisch mit dem Häufigkeitswert (HW) zu verknüpfen. Hierdurch ist es beispielsweise möglich, bei einem relativ kleinen Wert des Dominanzwertes (DW), der auf eine geringfügige Unplausibiltät des Schlupfsignals (S) deutet, erst relativ spät, d.h. bei einem großen Wert des Häufigkeitswertes (HW), einen Fehler zu signalisieren. Im umgekehrten Fall kann bei einem sehr stark unplausiblen Signalverhalten bereits bei einem kleineren Häufigkeitswert (HW) der Fehler angezeigt werden und somit der Fahrer frühzeitig gewarnt werden.

In einem weiteren Ausführungsbeispiel kann das erfindungsgemäße Verfahren auch in einer automatischen Steueranlage für ein Segelboot eingesetzt werden. Es ist bekannt, derartige Steueranlagen für eine automatische Steuerung bzw. Beibehaltung eines vorgegebenen Kurses beim Betrieb von Segelbooten auf hoher See einzusetzen. Insbesondere bei Einhand-Segelbooten, bei denen die Besatzung aus nur einer Person besteht, ist eine derartige Steueranlage aus Sicherheitsgründen erforderlich.

Eine derartige Steuereinrichtung weist üblicherweise eine Kompaßeinrichtung auf, die ein Fahrtrichtungssignal an ein elektronisches Steuergerät abgibt, welches wiederum ein Ansteuersignal für eine Verstelleinrichtung der Ruderanlage des Segelbootes abgibt. Die Verstelleinrichtung kann z. B. als elektrischer Servomotor ausgebildet sein. Zusätzlich weist die Steuereinrichtung zur Erhöhung der Betriebssicherheit bei der automatischen Ruderverstellung eine Krängungsmeßeinrichtung auf, die ein die Krängung des Segelbootes repräsentierendes Signal an das elektronische Steuergerät abgibt. Da es bei alleiniger Berücksichtigung des Signals der Kompaßeinrichtung zur Beibehaltung einer vorgegebenen Fahrtrichtung bei starken Windböen zu einer unerwünschten starken Krängung des Segelbootes und hierdurch zu einem gefährlichen Fahrzustand kommen kann, wird in dem Steuergerät das zusätzliche Krängungssignal derart ausgewertet, daß bei Überschreitung eines Schwellenwertes ein derartiges Ansteuersignal an die Verstelleinrichtung für die Ruderanlage ausgegeben wird, das zu einem Anluven des Segelbootes führt. Hierdurch wird der Winddruck in dem Segel und somit auch die Krängung des Segelbootes verringert. Nach entsprechender Unterschreitung des Schwellenwertes kann dann durch ein anderes Ansteuersignal die gewünschte Fahrtrichtung des Segelbootes wieder hergestellt werden.

Bei einseitiger Beladung des Segelbootes oder bei ungleichmäßiger Verteilung der Besatzung, insbesondere bei kleinen Segelbooten, weist das Segelboot auch ohne den Windeinfluß eine bestimmte Krängung auf, so daß die Krängungsmeßeinrichtung ein Signal abgibt, das unter Umständen bereits den Schwellenwert überschreitet, durch den in dem Steuergerät die entsprechenden Verfahrensschritte ausgelöst werden, die zu einer Ruderverstellung zum Zwecke des Anluvens führen. Dies ist selbstverständlich unerwünscht. Durch Anwendung des erfindungsgemäßen Verfahrens kann ein derartiges Fehlansprechen vermieden werden. In diesem Fall wird als erfindungsgemäßes erstes Signal das Krängungssignal verwendet und durch Ausführung des erfindungsgemäßen Verfahrens in dem Steuergerät das durch die einseitige Beladung hervorgerufene Krängungssignal als Dominanzwert ermittelt. Die dem ersten Signal zugeordneten Verfahrensschritte sind dann die in dem Steuergerät ausgeführten Maßnahmen zur Erzeugung eines Ansteuersignals für die Ruderverstelleinrichtung zum Zwecke des Anluvens.

**Patentansprüche**

1. Verfahren zur Verarbeitung von Signalen mit folgenden Merkmalen:

   a) es ist wenigstens ein erstes Signal (S) vorhanden, das zu jedem Zeitpunkt einen Wert aufweist, wobei die Werte sich mit der Zeit verändern können,

   b) die Werte des ersten Signals (S) können sowohl innerhalb als auch außerhalb eines für das erste Signal (S) festgelegten Grundwertebereichs (GWMIN, GWMAX) angeordnet sein,

   c) es wird als Dominanzwert (DW) ein relativ häufig auftretender Wert des ersten Signals (S) ermittelt,

   d) es wird ein Häufigkeitswert (HW) ermittelt, der die Häufigkeit des Auftretens von in der Umgebung des Dominanzwertes (DW) gelegenen Werten des ersten Signals (S) angibt,

   e) in Abhängigkeit des Auftretens bestimmter Werte des ersten Signals (S) außerhalb des Grundwertebereichs (GWMIN, GWMAX) werden unter Berücksichtigung des Dominanzwertes (DW) und des Häufigkeitswertes (HW) jeweils bestimmte, den Werten des ersten Signals (S) zugeordnete Verfahrensschritte (43, 49) ausgeführt, derart, daß die Ausführung der Verfahrensschritte (43, 49) zusätzlich von der Größe der Abweichung des Dominanzwertes (DW) von dem Grundwertbereich (GWMIN, GWMAX) abhängig gemacht wird, wenn der Häufigkeitswert (HW) wenigstens eine vorbestimmte Größe (H1, H2) erreicht.

2. Verfahren nach Patentanspruch 1, gekennzeichnet durch folgende Merkmale:

   a) das erste Signal (S) wird in einem geschlossenen Regelkreis verwendet,

   b) durch die Ausführung der den bestimmten Werten des ersten Signals (S) zugeordneten Verfahrensschritte (43, 49) ist das erste Signal (S) beeinflußbar.

3. Verfahren nach Patentanspruch 1 oder 2, gekennzeichnet durch folgende Merkmale:

   a) zur Beurteilung des ersten Signals (S) werden Zeitabschnitte festgelegt, die zeitlich aufeinander folgen,

   b) ein Zeitabschnitt kann entweder regulär ablaufen oder vorzeitig beendet werden,

   c) der in einem Zeitabschnitt zuerst auftretende Wert des ersten Signals (S) wird als Vergleichswert (VGW) für diesen Zeitabschnitt verwendet,

   d) es wird als Vergleichswertebereich ein Wertebereich festgelegt, der den Vergleichswert (VGW) umgibt,

   e) bei Auftreten eines außerhalb des Vergleichswertebereiches gelegenen Wertes des ersten Signals (S) wird ein Zeitabschnitt vorzeitig beendet.

4. Verfahren nach Patentanspruch 3, gekennzeichnet durch folgende Merkmale:

   a) es werden ausschließlich die in regulär abgelaufenen Zeitabschnitten ermittelten Vergleichswerte (VGW) berücksichtigt,

   b) ein erster berücksichtigter Vergleichswert (VGW) wird als Vorzugswert (VZW) verwendet,

   c) es wird als Vorzugswertebereich ein Wertebereich festgelegt, der den Vorzugswert (VZW) umgibt,

   d) der Häufigkeitswert (HW) wird aus der Anzahl weiterer berücksichtigter Vergleichswerte (VGW), die innerhalb des Vorzugswertebereiches liegen, abgeleitet.

5. Verfahren nach Patentanspruch 4, dadurch gekennzeichnet, daß der Dominanzwert (DW) mit dem Vorzugswert (VZW) identisch ist.

6. Verfahren nach Patentanspruch 4, dadurch gekennzeichnet, daß der jeweilige Vorzugswert (VZW) beim Auftreten bestimmter Kombinationen des Häufigkeitswertes (HW) und interner Zustandsgrößen (R1, R2) des Verfahrens als Dominanzwert (DW) übernommen wird.

7. Verfahren nach wenigstens einem der Patentansprüche 4 bis 6, dadurch gekennzeichnet, daß der Vergleichswertebereich die gleiche Größe (-ΔVGW, +ΔVGW) aufweist wie der Vorzugswertebereich.

8. Verfahren nach wenigstens einem der vorhergehenden Patentansprüche, dadurch gekennzeichnet, daß der Grundwertebereich (GWMIN, GWMAX) Werte mit positivem und/oder negativem Vorzeichen umfaßt, deren Betrag im Vergleich zu dem gesamten Wertebereich des ersten Signals (S) klein ist.

9. Verfahren nach wenigstens einem der vorhergehenden Patentansprüche, dadurch gekennzeichnet, daß die den bestimmten Werten des ersten Signals (S) zugeordneten Verfahrensschritte (43, 49) dann ausgeführt werden, wenn das erste Signal (S) einen Schwellenwert (SW1, SW2) überschreitet bzw. unterschreitet.

10. Verfahren nach wenigstens einem der vorhergehenden Patentansprüche, dadurch gekennzeichnet, daß die Werte des ersten Signals (S) rechnerisch in zunehmendem Maß verkleinert bzw. vergrößert werden, je größer die Abweichung des Dominanzwertes (DW) von dem Grundwertebereich (GWMIN, GWMAX) ist.

11. Verfahren nach Patentanspruch 9, dadurch gekennzeichnet, daß der Schwellenwert (SW1, SW2) in zunehmendem Maß vergrößert bzw. verkleinert wird, je größer die Abweichung des Dominanzwertes (DW) von dem Grundwertebereich (GWMIN, GWMAX) ist.

12. Verfahren nach wenigstens einem der Patentansprüche 4 bis 11, gekennzeichnet durch folgende Merkmale:

    a) der Häufigkeitswert (HW) wird beim Auftreten von innerhalb des Vorzugswertebereiches gelegenen, berücksichtigten Vergleichswerten (VGW) automatisch erhöht,

    b) der Häufigkeitswert (HW) wird beim Auftreten von außerhalb des Vorzugswertebereiches gelegenen, berücksichtigten Vergleichswerten (VGW) automatisch verringert.

13. Verfahren nach Patentanspruch 12, gekennzeichnet durch folgende Merkmale:

    a) zur Bestimmung des Häufigkeitswertes (HW) wird ein Zähler verwendet, dessen Zählerstand den Häufigkeitswert darstellt,

    b) nach einem regulär abgelaufenen Zeitabschnitt wird der Zählerstand erhöht, wenn der Vergleichswert (VGW) innerhalb des Vorzugswertebereiches liegt,

    c) nach einem regulär abgelaufenen Zeitabschnitt wird der Zählerstand verringert, wenn der Vergleichswert (VGW) außerhalb des Vorzugswertebereiches liegt,

    d) anderenfalls wird der Zählerstand beibehalten.

14. Verfahren nach wenigstens einem der Patentansprüche 4 bis 13, dadurch gekennzeichnet, daß der Vorzugswert (VZW) in einem Zeitabschnitt bestimmt wird, in dem der Häufigkeitswert (HW) wenigstens näherungsweise den Wert Null aufweist.

15. Verfahren nach wenigstens einem der vorhergehenden Patentansprüche, dadurch gekennzeichnet, daß das erste Signal (S) den Unterschied zwischen einem zweiten (V1) und einem dritten (V2) Signal darstellt.

16. Verfahren nach Patentanspruch 15, dadurch gekennzeichnet, daß das erste Signal (S) mittels Subtraktion als Differenz zwischen dem zweiten (V1) und dem dritten (V2) Signal bestimmt wird.

17. Verfahren nach Patentanspruch 15 oder 16, dadurch gekennzeichnet, daß das erste Signal (S) mittels Division als Quotient aus dem zweiten (V1) und dem dritten (V2) Signal bestimmt wird.

18. Verfahren nach wenigstens einem der Patentansprüche 15 bis 17, dadurch gekennzeichnet, daß das zweite (V1) und/oder das dritte (V2) Signal ein Drehgeschwindigkeitssignal eines Rades oder ein Geschwindigkeitssignal eines Fahrzeuges oder ein Referenz-Geschwindigkeitssignal (VREF) ist.

19. Verfahren nach wenigstens einem der vorherge-

henden Patentansprüche, <u>dadurch gekenn-</u> <u>zeichnet,</u> daß das erste Signal (S) ein Schlupfsignal ist.

20. Verfahren nach wenigstens einem der vorherge- henden Patentansprüche, <u>dadurch gekenn-</u> <u>zeichnet,</u> daß Vorfahrensschritte zur Blockiervorhinderung (ABC) von Rädern eines Kraftfahrzeuges und/oder zur Antriebsschlupfregelung wenigstens einer Antriebsachse eines Kraftfahrzeuges und/oder zur Erkennung und Anzeige von Fehlern vorgesehen sind.

21. Verfahren nach Patentanspruch 20, <u>dadurch</u> <u>gekennzeichnet,</u> daß als interne Zustandsgrößen (R1, R2) Signale vorgesehen sind, durch die ein Eingriff der Blockierverhinderung (ABS) und/oder der Antriebsschlupfregelung angezeigt wird.

Fig.1

Fig. 2

EP 0 879 746 A2

Start — 17

T := T + 1 — 18

T = 1 ? — 19

SMIN < S < SMAX ? — 9

VGW := S — 20

T := 0 — 10

VGW-ΔVGW < S < VGW+ΔVGW ? — 21

T := 0 — 22

T = TMAX ? — 23

T := 0 — 24

HW = 0 ? — 25

VZW := VGW — 26

VZW-ΔVGW < VGW < VZW+ΔVGW ? — 27

HW = HMAX ? — 28

HW := HW-1 — 29

HW := HW+1 — 30

Fig. 3

Fortsetzung in Fig. 4

14

Fig. 4

**Fig. 5**

$$SW1 := VREF *\left(DW-\frac{GWMIN+GWMAX}{2}\right)+ 5km/h$$

$$SW2 := V2 * \left(DW - \frac{GWMIN+GWMAX}{2}\right) + 5km/h \qquad 46$$

Start ASR — 45

V2-V1 > SW2 ? — 47

R2 = 0 ? — 48

V2-V1 > SW2-5km/h ? — 50

Antriebsschlupfregelung für Hinterrad durchführen. Hierbei R2 verändern. — 49

Ende ASR — 51

Fig. 6